# EUROPÄISCHE PATENTANMELDUNG

(11) **EP 1 517 114 A2**
(43) Veröffentlichungstag der Anmeldung: **23.03.2005**
(21) Anmeldenummer: 04021886.9
(22) Anmeldetag: 15.09.2004
(51) Int. Cl.: F41J 5/02, F41J 5/08, G01S 13/87

(54) **Vorrichtung zur Lageerfassung eines Geschosses relativ zu einer Zieldarstellung**

(30) Priorität: 20.09.2003 DE 20314584 U; 12.05.2004 DE 202004007593 U
(71) Anmelder: Bücheler, Gerd, 70376 Stuttgart (DE); Schnitzler, Wolfgang, 78112 St. Georgen (DE)
(72) Erfinder: Bücheler, Gerd, 70376 Stuttgart (DE); Schnitzler, Wolfgang, 78112 St. Georgen (DE)
(74) Vertreter: Sobisch, Peter, Dipl.-Ing.

(57) **Zusammenfassung**

Eine Vorrichtung zur Lageerfassung eines Geschosses in einer flächigen Zieldarstellung ist durch zwei, einen definierten Abstand voneinander aufweisende, jeweils aus einem Lasergenerator (1', 2') und einem Ablenkmodul (3, 4) bestehende Baueinheiten gekennzeichnet, die jeweils zur Emittierung eines in einer sich mit geringem Abstand vor der Zieldarstellung befindlichen, sich parallel zu dieser erstreckenden Messebene rotierenden Strahles sowie zum Empfang von an einem, die Messebene durchdringenden Geschoss reflektierter Strahlung eingerichtet sind, so dass anhand der Drehwinkelstellungen beider Ablenkmodule (3, 4) zum Zeitpunkt des Empfanges reflektierter Strahlung der Durchstoßpunkt (12) des Geschosses in der Messebene ermittelbar ist. Jede Ablenkeinheit steht mit einem, die jeweiligen Drehwinkelwerte darstellenden Inkrementalgeber in Verbindung, wobei zur Ermittlung der Lage des Durchstoßpunktes (12) anhand dieser Drehwinkelwerte in Verbindung mit dem Wert des Abstandes der Baueinheiten voneinander ein Rechner vorgesehen ist, der mit dem Inkrementalgeber in Verbindung steht. Beide Baueinheiten sind im übrigen unabhängig voneinander und können mit unterschiedlichen Wellenlängen betrieben werden, so dass über eine entsprechende Filterung von Eingangsignalen ein Empfang von Störsignalen unterbunden ist. Von besonderem Vorteil ist neben einer hohen Genauigkeit der Lageerfassung deren Geschwindigkeit, so dass eine Anwendung der Vorrichtung auch bei hohen Schussfolgegeschwindigkeiten möglich ist.

## Beschreibung

Die Erfindung bezieht sich auf eine Vorrichtung entsprechend dem Oberbegriff des Anspruchs 1.

Es ist allgemein bekannt, durch Projektion eines Bildes auf eine ebene Papierfläche eine Zieldarstellung zu bilden, so dass mittels einer, sich hinter der Zieldarstellung befindlichen Beleuchtungseinrichtung die Trefferlage eines Geschosses durch einen beschussseitig erkennbaren Lichtpunkt dargestellt wird. Das die Projektionsfläche der Zieldarstellung bildende Papier wird beispielsweise von einer, sich oberhalb des Zielfeldes befindlichen Rolle ab- und im Verschleißfall, nämlich in Abhängigkeit von der Zahl der Durchschüsse auf eine, sich unterhalb des Zielfeldes befindliche Rolle aufgewickelt. Die Zieldarstellung enthält regelmäßig ein zur quantitativen Beschreibung einer Trefferlage geeignetes Koordinatensystem, welches mittels einer, auf die Zieldarstellung ausgerichteten Videokamera die Lageerkennung eines Durchschusses relativ zu der Zieldarstellung ermöglicht. Ein Koordinatensystem kann alternativ auch lediglich in das zur Auswertung herangezogene Bild der Videokamera eingeblendet sein.

Um bei intensiver Nutzung der Vorrichtung die Erkennung von Trefferlagen und deren Zuordnung zu einem bestimmten Schützen vornehmen zu können, ist ein ständiges Verschließen früherer Durchschussöffnungen in der Papierfläche erforderlich. Selbst wenn jedoch in diesem Sinne verfahren wird, sind ein nach Maßgabe des Nutzungsumfangs beträchtlicher Bedienungsaufwand sowie ein Verbrauch an vergleichsweise teurem Papier unvermeidbar.

Eine Vorrichtung dieser Art ist bei Verwendung von halbautomatischen oder automatischen Waffen, insbesondere bei hohen Schussfolgegeschwindigkeiten kaum oder überhaupt nicht nutzbar, insbesondere dann, wenn es um die exakte Erkennung und Auswertung der Trefferlagen einzelner Schüsse geht. Insoweit haftet dieser Vorrichtung der Nachteil einer die Auswertungsgeschwindigkeit betreffenden Trägheit an.

Aus der DE-OS 21 98 573 ist bereits eine Vorrichtung bekannt geworden, mittels welcher ein Teil der oben dargestellten Nachteile behebbar ist. Diese besteht aus einem Laserstrahlortungsgerät, welches zur Lagererkennung eines Geschosses in einer, sich senkrecht zu einer Beschussrichtung erstreckenden Messebene eingerichtet ist. Zu diesem Zweck sind zwei, in der Ebene beiderseits einer Zieldarstellung mit Abstand entfernt voneinander angeordnete Laserlichtquellen unterschiedlicher Frequenz vorgesehen, deren Strahlung jeweils durch mit hoher Geschwindigkeit rotierende Ablenkspiegel in dieser Ebene zwecks Abtastung derselben ausgelenkt wird. Die Lage eines die Messebene durchdringenden Geschosses wird anhand der von diesem reflektierten Strahlung in Abhängigkeit von den aktuellen Drehwinkeln der beiden Ablenkspiegel detektiert, so dass anhand des bekannten Abstandes der Ablenkspiegel und dieser beiden Winkel die Lage des Durchtrittspunktes des Geschosses in der Messebene errechenbar ist.

Zur Realisierung von zwei Laserlichtquellen unterschiedlicher Frequenzen wird bei dieser bekannten Vorrichtung ein Laserlichtgenerator vorgeschlagen, dessen Strahlung über ein Spaltprisma auf zwei Teilstrahlengänge aufgeteilt wird, aus denen mittels eines Interferenzfilters jeweils eine monochromatische Strahlung ausgefiltert und einem rotierenden Ablenkspiegel zugeführt wird. Mit den jeweiligen Ablenkspiegeln rotierend ist ein Strahlungsempfänger, hier ein Photonenvervielfacher angeordnet, so dass in Verbindung mit einem synchron rotierenden Drehwinkelgeber die Drehwinkelstellungen der beiden Ablenkspiegel darstellbar sind, unter denen an einem die Messebene durchdringenden Geschoss reflektierte Strahlung empfangen wird. Der Empfang erfolgt unter Zwischenanordnung einer, eine Strahlung der Wellenlänge ausfilternden Interferenzfilters, die über den zugeordneten Ablenkspiegel ausgestrahlt worden ist.

Ein Nachteil besteht bei dieser bekannten Vorrichtung in der Verwendung eines Spaltprismas, welches zu einer Strahlaufweitung und einer dementsprechend nach Maßgabe des Abstandes der beiden Laserlichtquellen zunehmenden Ungenauigkeit ermittelter Positionsdaten führt. Dieser Umstand zwingt mit Hinblick auf eine erwünschte Genauigkeit der Positionserfassung zu einer flächenmäßigen Begrenzung einer Zieldarstellung bzw. eines Zielfeldes.

Eine nach Maßgabe des Abstandes zwischen dem Spaltprisma und den beiden Laserlichtquellen zunehmend diffuse Bestrahlung des Geschosses kann ferner zu Reflektionen führen, welche über die Strahlungsempfänger beider Laserlichtquellen empfangen werden, so dass an die Qualität der Ausfilterung einer gewünschten Wellenlänge hohe Anforderungen gestellt werden müssen.

Aus der DE 26 43 900 A1 ist eine weitere vergleichbare Vorrichtung bekannt, bei der beiderseits einer, sich senkrecht zu einer Beschussrichtung erstreckenden Messebene entfernt mit Abstand voneinander Winkelscanner vorgesehen sind, die dazu bestimmt sind, den Winkel zu erfassen, unter dem ein die Messebene durchdringendes Geschoss optisch detektiert wird, so dass anhand des Abstandes der beiden Winkelscanner die Lage des Durchstoßpunktes des Geschosses in der Messebene errechenbar ist. Zu diesem Zweck ist zumindest eine Beleuchtungseinrichtung vorgesehen, die mittels einer Triggerlichtschranke durch das Geschoss zur Ausleuchtung des Durchschussfeldes aktiviert wird. Die Winkelscanner bestehen jeweils aus mit hoher Drehzahl rotierenden Spiegeln, die dazu bestimmt sind, das Geschoss zum Zeitpunkt des Durchdringens der Messebene optisch abzubilden, wobei der aktuelle Drehwinkel erfasst wird, unter dem die Abbildung erfolgt. Die Messebene befindet sich innerhalb eines Rahmengestells, welches den Umfangsbereich der Messebene bildet und Innenwandungen aufweist, die zur Erhöhung der Lichtausbeute bzw. zur Kontrastverbesserung mit reflektierenden Folien überzogen sind.

Die Benutzung einer optischen Abbildung des Geschosses im sichtbaren Bereich macht regelmäßig besondere Maßnahmen erforderlich, um den Einfluss von Fremdlicht auszublenden und um den Kontrast der Abbildung zu verbessern, so dass das Geschoss überhaupt erkennbar ist. Zu dem hiermit verbundenen konstruktiven Aufwand tritt als weiterer Nachteil ein Risiko von Beschädigungen, nachdem sich das vorstehend genannte Rahmengestell in dem Beschussbereich befindet.

Eine Vorrichtung zur Feststellung der Trefferlage in einem Zielfeld anhand der Ermittlung der Flugbahndaten eines Geschosses ist aus dem DE 298 19 394 U1 bekannt. Hierbei wird in einem, mit geringem Abstand vor dem Zielfeld eingerichteten, eine definierte Erstreckung in Beschussrichtung aufweisenden Messraum mittels eines Radargerätes die Flugbahn des Geschosses einschließlich dessen Geschwindigkeit ermittelt, wobei anhand der Flugbahn in Verbindung mit der Lage des Messraumes die Koordinaten der Trefferlage in einem X-Y-Koordinatensystem des Zielfeldes errechnet werden. Die Erfassung der Geschwindigkeit, welches beispielsweise anhand einer Auswertung der Frequenzen eines Sende- und eines Empfangssignals, die sich um die Dopplerfrequenz unterscheiden, beruhen kann, dient dazu, die Messung auf Hochgeschwindigkeitsziele, nämlich Geschosse zu beschränken. Das in einiger Entfernung vor einem Zielfeld eingesetzte Radargerät kann eine rotierende Antenne aufweisen, deren Hauptstrahlungsrichtung im Wesentlichen in Richtung auf das Zielfeld hin gerichtet ist, wobei dessen Betriebsparameter dahingehend eingestellt sind, dass der maximal erfassbare Bereich in einer geringfügigen Entfernung vor dem Zielfeld endet, wobei von diesem erfassbaren Bereich lediglich ein vergleichsweise schmaler Bereich unmittelbar vor dem Zielfeld als Messraum benutzt wird und wobei das Echosignal in dem restlichen Teil des erfassbaren Bereiches ignoriert wird. Die rotierende Antenne des Radargerätes weist eine keulenartige Charakteristik auf, die in einer Ebene des Messraumes einen entsprechend rotierenden Messbereich bildet, der eine Fläche überstreicht, die - in Beschussrichtung gesehen - das Zielfeld zumindest überdeckt. Anstelle einer solchen mechanischen rotatorischen oder auch oszillatorischen Abtastung einer Ebene des Messraumes kommt auch die Verwendung einer Antenne mit elektrisch schwenkbarer Richtcharakteristik (phased array Antenne) in Betracht. In jedem Fall wird die Stellung des Messbereichs in der genannten Ebene mittels eines Stellungsgebers erfasst, so dass erst anhand der Lageinformation des Stellungsgebers in Verbindung mit einer Auswertung der Lage der Flugbahn innerhalb des Messbereichs die Trefferlage im Zielfeld ermittelbar ist.

Die Genauigkeit des Messergebnisses einer solchen Vorrichtung wird maßgeblich durch die Genauigkeit der Justierung des Nullpunktes des X-Y-Koordintensystems relativ zu dem rotierenden oder in sonstiger Weise bewegten Messfeld beeinflusst. Hinzutritt, dass sowohl bei der mechanischen als auch bei der elektrischen Verschwenkung des Messbereichs innerhalb der genannten Ebene bedingt durch die Bewegung des Messbereichs unvermeidbare Detektionslücken entstehen, ein Mangel, der insbesondere bei hohen Schussfolgefrequenzen bei Verwendung automatischer Waffen ins Gewicht fällt. Schließlich bringt ein mechanischer Antrieb für eine Antenne einen unvermeidbaren Verschleiß und damit Wartungsaufwand mit sich.

Es ist vor diesem Hintergrund die Aufgabe der Erfindung, eine Vorrichtung der eingangs bezeichneten Art mit Hinblick auf einen einfachen und flexiblen Aufbau sowie die Möglichkeit der Bildung größeren Zielflächen bzw. Zieldarstellungen mit Hinblick auf eine hohe Messgenauigkeit und eine einfache Handhabbarkeit hin auszugestalten. Gelöst ist diese Aufgabe bei einer solchen Vorrichtung durch die Merkmale des Kennzeichnungsteils des Anspruchs 1.

Erfindungswesentlich ist hiernach die Verwendung von zwei, jeweils eine Strahlungsquelle und einem Strahlungsempfänger beinhaltenden Baueinheiten, die - in Beschussrichtung einer Zieldarstellung gesehen - beiderseits einer Zieldarstellung angeordnet sind, wobei jeder Baueinheit ein Ablenkmodul zugeordnet ist, der dazu bestimmt und eingerichtet ist, in einer, von dem zu detektierenden Geschoss zu durchdringenden Messebene Strahlung zu emittieren und an dem Geschoss zum Zeitpunkt des Durchdringen der Messebene reflektierte Strahlung zu empfangen. Das aus der Strahlungsquelle, dem Strahlungsempfänger und dem Ablenkmodul bestehende System weist hinsichtlich eines Sendens und eines Empfangens eine gebündelte, linienhafte Richtcharakteristik auf, die nach Maßgabe der Umdrehungsgeschwindigkeit des Ablenkmoduls die gesamte Messebene abtastet, und zwar derart, dass im Fall eines an einem Geschoss reflektierten Signals eine Drehwinkelzuordnung des reflektierten Signals gegeben ist. Die beiden, auf diese Weise ermittelten Winkelmesswerte der beiden Ablenkmodule ermöglichen in Verbindung mit dem bekannten definierten und feststehenden Abstand der beiden Ablenkmodule eine Ermittlung der Lage des Geschosses innerhalb der Messebene.

Zur Detektion des Geschosses kommt eine Strahlung zum Einsatz, welche die Generierung eines scharf gebündelten Strahles zulässt, so dass mit dem Schnittpunkt zweier linienhafter Strahlungen die Lage des Geschosses in der Messebene mit hoher Genauigkeit darstellbar ist. Die Strahlung ist ferner mit der Maßgabe gewählt, dass eine Beeinflussung durch Fremdstrahlung auszuschließen ist. Insbesondere muss dafür Sorge getragen werden, dass sich die Strahlungs- und Empfangscharakteristika der beiden Strahlungsquellen unterscheiden oder durch sonstige Maßnahmen sichergestellt ist, dass eine gegenseitige Beeinflussung ebenfalls auszuschließen ist.

Da beide Baueinheiten unabhängig voneinander jeweils mit einer Strahlungsquelle versehen sind, können deren Parameter individuell an den Messzweck angepasst werden. Regelmäßig wird sich die mittels einer rotierenden Richtcharakteristik abzutastende Messebene parallel zu der flächigen Zieldarstellung erstrecken, die somit grundsätzlich von beliebiger Beschaffenheit sein kann. Die hohe Geschwindigkeit der Abtastung sowie der Gewinnung von reflektierte Strahlung beschreibenden Signalen ermöglicht eine Verwendung dieser Vorrichtung auch bei automatischen, durch eine hohe Schussfolgegeschwindigkeit gekennzeichneten Waffen, ohne dass die Auswertung durch den Zustand der Zieldarstellung beeinträchtigt wird. Die Vorrichtung ist im einfachsten Fall durch zwei Baueinheiten verkörpert, die - in Beschussrichtung einer Zieldarstellung gesehen - beiderseits der Zieldarstellung nach Maßgabe eines definierten Abstandes voneinander anzuordnen sind, wobei hinsichtlich der Größe eines zulässigen Abstandes der Baueinheiten praktisch keine Beschränkungen bestehen. Mittels eines langgestreckten Trägers, auf dem und in dessen Längsrichtung die beiden Baueinheiten justierbar angeordnet sind, gestaltet sich die Inbetriebnahme der Vorrichtung besonders einfach. Zweckmäßigerweise erfolgt die quantitative Auswertung der mittels der erfindungsgemäßen Baueinheiten gewonnen Drehwinkelmesswerte gemäß den Merkmalen des Anspruchs 2 durch einen Rechner, der mit den Baueinheiten in Verbindung steht, so dass gleichzeitig eine Speicherung und weitergehendere statistische Auswertung der gewonnen Messwerte möglich ist.

Gemäß den Merkmalen der Ansprüche 3 oder 4 kann die benutzte Strahlung vorzugsweise Laserstrahlung oder Infrarotstrahlung sein, wobei Laserstrahlung als besonders vorteilhaft angesehen wird, insbesondere im Hinblick auf Genauigkeit des Messergebnisses. Wesentlich für die Auswahl der Strahlung ist deren Eignung zur Bildung eines scharf gebündelten Strahles, der lediglich eine geringe Aufweitungstendenz zeigt. Diese Bedingung wird besonders durch Laserstrahlung erfüllt. Nachdem beide Baueinheiten über eine eigene Laserquelle verfügen und eine Strahlaufweitung auch auf diesem Wege in engen Grenzen gehalten ist, ermöglicht die Verwendung eines Linienlasers ein besonders exaktes Lokalisieren des Geschosses anhand von an diesem reflektierter Strahlung, welche eine Feststellung des Durchstoßpunktes des Geschosses in der Messebene ermöglicht. Die Messebene befindet sich regelmäßig in der Nähe des Messfeldes der Zieldarstellung und ermöglicht unmittelbare Rückschlüsse auf die Trefferlage innerhalb der Zieldarstellung. Sämtliche der einsetzbaren Strahlungsarten sind außerdem durch eine außerordentlich geringe Trägheit bei der Messwertbildung gekennzeichnet.

Gemäß den Merkmalen der Ansprüche 5 bis 7 ist eine Messebene vorgesehen, die mittels zweier Strahlungsquellen von unterschiedlicher Wellenlänge abgetastet wird. Aufgrund der Verwendung unterschiedlicher Wellenlängen ist der Empfang von Fehlsignalen durch die jeweils andere Baueinheit ausgeschlossen. Zur Auswertung der in unterschiedlichen Messebenen gewonnen Drehwinkelwerte können beide Messebenen aufeinander projiziert werden, so dass die weitere Auswertung der Drehwinkelwerte sich analog derjenigen bei Vorhandensein lediglich einer Messebene gestaltet.

Gemäß den Merkmalen der Ansprüche 8 bis 10 werden zwei Strahlungsquellen gleicher Wellenlängen benutzt, die jedoch in voneinander - in Beschussrichtung der Zieldarstellung gesehen - voneinander beanstandeten und sich vorzugsweise parallel zueinander erstreckenden Messebenen wirksam sind, wobei der - in Beschussrichtung gesehen - zu definierende Abstand der Messebenen mit der Maßgabe eingerichtet ist, dass keine unerwünschte Wechselwirkung zwischen den Strahlungen der beiden Strahlungsquellen eintreten kann. Dieses Ziel ist insbesondere bei Verwendung von Laserstrahlung mit äußerst geringen Abständen der beiden Messebenen besonders vorteilhaft realisierbar.

Die Merkmale der Ansprüche 11 und 12 sind auf eine mögliche konstruktive Realisierung eines Ablenkmoduls gerichtet. Dieser besteht hiernach aus einer drehbaren Anordnung von Spiegelflächen, die jeweils mit einer Strahlungsquelle und einem Strahlungsempfänger in Wirkverbindung stehen, wobei die auf die Spiegelfläche auftreffende Strahlung nach Maßgabe der Umdrehungsgeschwindigkeit der Anordnung innerhalb der Messebene ausgelenkt wird. Beide Spiegelflächenanordnungen, nämlich diejenige zum Senden von Strahlung und diejenige zum Empfang von Strahlung werden synchron gedreht, wobei mittels eines Drehwinkelgebers jederzeit der Drehwinkel feststellbar ist, unter dem ein reflektiertes Signal empfangen wird, wobei diese Drehwinkelwerte in Verbindung mit dem Abstand der Ablenkmodule die Grundlage der Positionsbestimmung des Geschosses bilden.

Die Messebene bzw. die Messebenen können sich entsprechend den Merkmalen der Ansprüche 13 und 14 vor, jedoch auch hinter der Zieldarstellung befinden.

Der Träger der Zieldarstellung, der die Projektionsfläche bildet, kann dementsprechend nach den Merkmalen des Anspruchs 15 aus Gummi oder Kunststoff bestehen, so dass in diesem Zusammenhang bisher benutzte, relativ teuere Leinwandkonstruktionen sowie die Verwendung von Papier oder Kartonagen überflüssig werden.

Dies bedeutet, dass die Benutzung der erfindungsgemäßen Vorrichtung zur Lageerfassung eines Geschosses mit einem geringeren Material- und Dienstleistungsaufwand verbunden ist.

Wesentlich ist für alle Ausführungsformen der Erfindung, dass in einer oder auch zwei Messebenen, die regelmäßig nicht mit dem Ziel, bzw. der flächigen Zieldarstellung identisch sind, somit in einem in der Tiefe außerordentlich begrenzten Bereich eine Abtastung mittels einer gerichteten Strahlung stattfindet, wobei die Genauigkeit der Messung unter anderem durch die Richtcharakteristik der eingesetzten, im Idealfalle linienhaften Strahlung bestimmt wird. In jedem Fall wird ein Geschoss anhand des Durchtritts durch eine Messebene bzw. durch Messebenen anhand eines an diesem reflektierten Strahlungsanteils detektiert. Außer der bereits erwähnten Laser- und Infrarotstrahlung kann grundsätzlich auch eine sonstige Strahlung des elektromagnetischen Spektrums benutzt werden, welche für eine linienhafte Abtastung einer Fläche geeignet ist. Zur Detektion des Geschosses innerhalb einer Messebene anhand der genannten Drehwinkelwerte können in Verbindung mit einer eine entsprechende Richtcharakteristik aufweisenden Antenne auch sonstige, aus der Radartechnik bekannte Detektionsverfahren benutzt werden, wobei lediglich beispielhaft auf das CW-Radar, das Pulsradar und das Doppler-Puls-Radar hingewiesen wird.

Die vorstehend vorgestellte Vorrichtung basiert zur Realisierung der Abtastung einer Messebene auf mechanisch drehbaren Spiegelanordnungen, denen die Funktion einer schwenkbaren Antenne mit einer definierten Richtcharakteristik zukommt. Anstelle einer derartigen mechanisch schwenkbaren Richtcharakteristik kommt grundsätzlich auch eine rein elektrisch schwenkbare Richtcharakteristik nach Art der an sich bekannten phased-array Antenne in Betracht.

Die eingangs dargelegte Aufgabe ist bei einer Vorrichtung der vorstehend erwähnten Art alternativ auch durch die Merkmale des Kennzeichnungsteils des Anspruchs 16 gelöst.

Erfindungswesentlich ist hiernach, dass durch die Hauptstrahlungsrichtungen der Antennen zweier Radargeräte eine Messebene vor einem Zielfeld gebildet wird, wobei die Ermittlung der Lage des Durchstoßpunktes der Flugbahn in dieser Messebene auf eine radargestützte Messung der Entfernungen dieses Durchstoßpunktes von den geräteeigenen Bezugspunkten der links- und rechtsseitig bezüglich der Zielfeldes angeordneten Radargeräte zurückgeführt wird. Da die Entfernung der genannten Bezugspunkte bekannt ist, ergibt sich in der Messebene die geometrische Figur eines Dreiecks, dessen obere Spitze durch die Lage des Durchstoßpunktes gebildet ist, so dass aufgrund elementarer geometrischer Beziehungen die Lage des Durchstoßpunktes in einem X-Y-Koordinatensystem, dessen Nullpunkt beispielsweise in den links- oder rechtsseitigen der beiden Bezugspunkte gelegt wird, auf analytischem Wege ermittelt werden kann. Aus der Lage des Durchstoßpunktes in der Messebene, die sich mit geringem Abstand beispielsweise vor dem Zielfeld befindet, kann auf die Trefferlage eines Geschosses in dem Zielfeld geschlossen werden. Ein besonderer Vorteil besteht darin, dass die Hauptstrahlungsrichtungen der Antennen der beiden Radargeräte im Wesentlichen senkrecht zur Beschussrichtung des Zielfeldes orientiert sind, so dass keine rotatorisch oder oszillatorisch bewegten Antennen, sondern lediglich feststehende Antennen benötigt werden. Dies bringt eine beträchtliche Vereinfachung der Handhabung und auch eine Verbesserung der Messgenauigkeit mit sich.

Gemäß den Merkmalen der Ansprüche 17 und 18 besteht die Vorrichtung in der einfachsten Form aus zwei Radargeräten, deren Hauptstrahlungsrichtungen eine erste Messebene definieren und einer Rechnereinheit, die mit diesen Radargeräten in Verbindung steht und die zur Auswertung der von diesen übertragenen Signale eingerichtet ist, die durch Reflexionen an dem zu vermessenden Geschoss gewonnen worden sind. Die genannte Messebene erstreckt sich im Wesentlichen senkrecht zu einer Beschussrichtung und befindet sich mit geringem Abstand vor einem Zielfeld. Es ist dies gegenüber dem eingangs dargelegten Stand der Technik eine einfachere Art der Realisierung eines ebenen Messbereichs.

Gemäß den Merkmalen des Anspruchs 19 werden für sämtliche Radarmessungen Dauerstrichradars eingesetzt. Im einfachsten Fall kommen somit Geräte zum Einsatz, die eine kontinuierliche unmodulierte Welle abstrahlen, wobei Entfernungen anhand des Energiegehalts der empfangenen Echoimpulse, bzw. deren Impulshöhe ermittelbar sind. Im Fall der in Beschussrichtung mit definiertem Abstand hintereinander angeordneten Radargeräte werden deren Echoimpulse lediglich zur Zeitmessung benutzt, so dass bei gegebener Messstrecke die Geschwindigkeit des Geschosses ermittelbar ist. Schließlich wird noch von dem Umstand unterschiedlicher Radarquerschnitte Gebrauch gemacht, nämlich eines Parameters, der u. a. auch durch geometrische Größenverhältnisse der zu erfassenden Geschosse beeinflusst wird und sich wiederum im Energiegehalt der Echoimpulse bzw. deren Impulshöhen niederschlägt.

Obwohl erfindungsgemäß das Radarverfahren des Dauerstrichradars bevorzugt wird, können auch andere Radarverfahren, z. B. Dauerstrichradars mit frequenzmodulierten Sendesignalen, soweit es um Geschwindigkeitsmessungen geht, Impulsradars, Puls-Doppler-Radars usw. verwendet werden, die zur Messung von Entfernungen und Geschwindigkeiten sowie zur Ermittlung der Größe eines Geschosses bzw. eines Flugobjekts geeignet sind, wobei lediglich feststehende Antennen benutzt werden. Auch ist die Erfindung nicht auf monostatische Radargeräte beschränkt, so dass gleichermaßen auch bistatische Radargeräte nutzbar sind.

Die Merkmale des Anspruchs 20 erleichtern die rechnerische Auswertung der von den Empfängern der beiden Radargeräte ermittelten Signale.

Die Merkmale des Anspruchs 21 sind darauf gerichtet, in einfacher Weise eine definierte Bezugsstrecke für die analytische Auswertung der Signale der Radargeräte zu gewinnen. Dies wird erfindungsgemäß durch eine langgestreckte, rohrartige Messbasis erreicht, auf der die zur Lagevermessung verwendeten Radargeräte, vorzugsweise monostatische Radargeräte justierbar angeordnet sind.

Die Merkmale des Anspruchs 22 sind auf eine Erweiterung der hinsichtlich des fliegenden Geschosses zu gewinnenden Informationen gerichtet. So sind Geschwindigkeit und Kaliber eines Geschosses ermittelbar - ein Umstand, der insbesondere bei der Simulation von Zieldarstellungen und der Auswertung von Schießleistungen im Rahmen einer militärischen Schießausbildung vielfältig nutzbar ist. So sind z. B. die Wirkungen von Trefferlagen in Abhängigkeit von dem eingesetzten Kaliber realitätsnah interpretierbar.

Die Merkmale der Ansprüche 23 bis 27 sind auf die weitere Ausgestaltung der Vorrichtung mit Hinblick auf die Messung bzw. Erfassung der Geschwindigkeit sowie der Größe eines Geschosses gerichtet. Vorzugsweise sind sämtliche der eingesetzten Radargeräte CW-Radars. Sämtliche Parameter des Geschosses bzw. dessen Flugbahn werden mit Mitteln der Radartechnik erfasst und stehen über eine Rechnereinheit visuell zur Verfügung, mittels welcher auch deren weitere Auswertung durchführbar ist. Der einfachen Handhabung dient eine langgestreckte Trägerbasis, auf der die, zur Geschwindigkeitsmessung bestimmten Radargeräte in justierbaren Positionen fixierbar sind. Diese Trägerbasis kann mit der Messbasis in mechanischer Verbindung stehen, so dass die Geschossgeschwindigkeit in der Nähe des Zielfeldes erfasst wird. Sie kann jedoch auch in unmittelbarer Nähe des Schützen platziert werden, so dass eine Anfangsgeschwindigkeit des Geschosses gemessen wird. Schließlich besteht die weitere Möglichkeit, dass eine Trägerbasis sowohl ziel- als auch schützenseitig angeordnet wird.

Die erfindungsgemäße Vorrichtung weist keine, sich während der Messung mechanisch bewegende Teile auf und ihre Justierung relativ zu einem Zielfeld gestaltet sich insbesondere in Verbindung mit einer Messbasis sowie einer Trägerbasis vergleichsweise einfach. Sie ermöglicht sehr genaue Messergebnisse.

Die eingangs definierte Aufgabe ist bei einer gattungsgemäßen Vorrichtung auch durch die Merkmale des Anspruchs 28 gelöst. Hierbei ist innerhalb einer Messebene ein aus Strahlengängen gebildetes Gitter gebildet, wobei die Lage eines Durchstoßpunktes eines Geschosses anhand zweier durch dieses unterbrochener Strahlengänge beschreibbar ist. Auch diese Vorrichtung ist durch keine beweglichen Teile gekennzeichnet. Für die Darstellung der Strahlengänge kann Strahlung im sichtbaren, jedoch auch nicht sichtbaren Bereich genutzt werden. Besonders vorteilhaft, insbesondere bei großflächigen Zieldarstellungen ist die Verwendung von Laserstrahlung aufgrund der erzielbaren Messgenauigkeit.

Die Erfindung wird im Folgenden unter Bezugnahme auf die in den Zeichnungen wiedergegebenen Ausführungsbeispiele näher erläutert werden. Es zeigen:
Fig. 1 eine Prinzipdarstellung eines ersten Ausführungsbeispiels der erfindungsgemäßen Vorrichtung mit Blickrichtung in Beschussrichtung eines Zielfeldes;
Fig. 2 eine Prinzipdarstellung einer ersten Ausführungsform der Vorrichtung gemäß einer vertikalen Blickrichtung auf eine Beschussrichtung;
Fig. 3 eine alternative Ausführungsform der Vorrichtung mit einer der Fig. 2 entsprechenden Blickrichtung;
Fig. 4 eine Prinzipdarstellung einer erfindungsgemäßen Laserlichtquelle in der Seitenansicht;
Fig. 5 eine Prinzipdarstellung einer erfindungsgemäßen Laserlichtquelle entsprechend einer Schnittebene V-V der Fig. 4.
Fig. 6 eine Prinzipdarstellung eines weiteren Ausführungsbeispiels einer erfindungsgemäßen Vorrichtung;
Fig. 7 eine Darstellung einer erfindungsgemäßen Schaltungsanordnung der in Fig. 6 gezeigten Vorrichtung;
Fig. 8 grafische Darstellungen der jeweils von den rechts- und linksseitigen Radargeräten der Vorrichtung gemäß Fig. 6 herrührenden Echosignale;
Fig. 9 grafische Darstellungen der Echosignale gemäß Fig. 8 nach erfolgter Differenzsignalbildung;
Fig. 10 eine um die Geschwindigkeitsmessung erweiterte Prinzipdarstellung der Lageerfassung eines Geschosses in perspektivischer Darstellung;
Fig. 11 eine Prinzipdarstellung einer weiteren Ausführungsform einer erfindungsgemäßen Vorrichtung;
Fig. 12 eine Seitenansicht der erfindungsgemäßen Vorrichtung entsprechend einer Blickrichtung XII der Fig. 11.

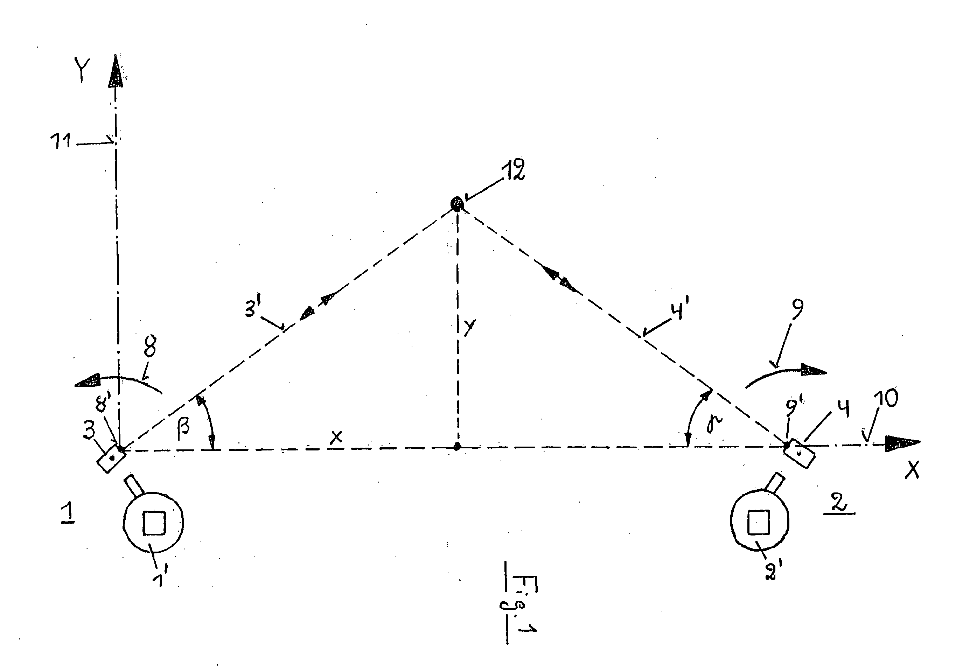

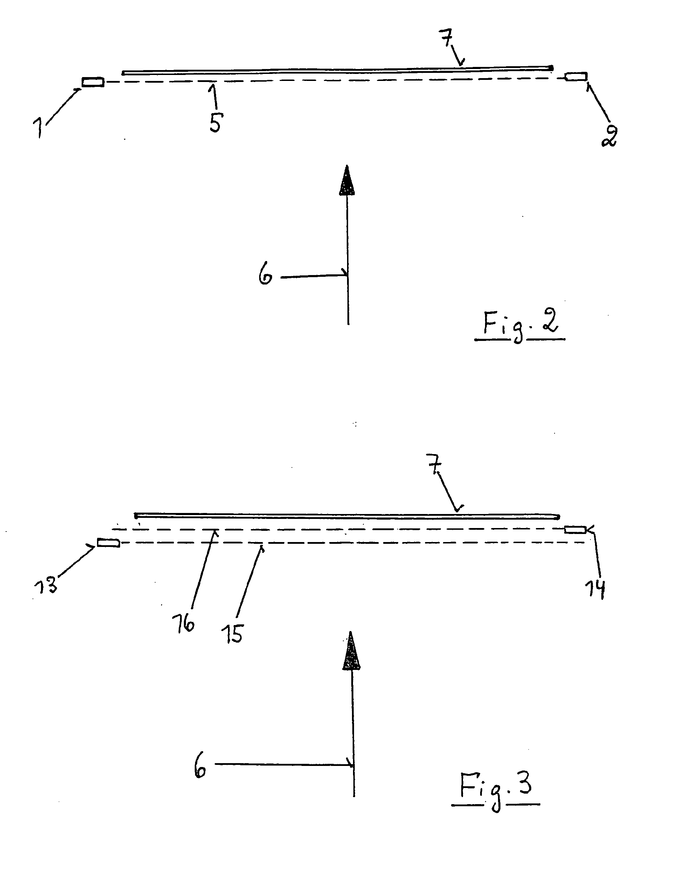

Die wesentlichen Elemente der in den Fig. 1 und 2 dargestellten Vorrichtung bestehen aus zwei, im Folgenden noch näher zu beschreibenden Laserlichtquellen 1, 2, die jeweils aus einem Lasergenerator 1', 2' sowie einem Ablenkmodul 3, 4 bestehen, der zum Senden sowie zum Empfangen von Laserstrahlung eingerichtet ist.

Die Ablenkmodule 3, 4 rotieren jeweils um Achsen senkrecht zu der Zeichenebene der Fig. 1 bzw. einer Messebene 5, die sich - in Beschussrichtung 6 gesehen - mit geringem Abstand vor einer flächigen Zieldarstellung 7 befindet. Auf die flächige Zieldarstellung 7 wird in an sich bekannter, hier nicht zu beschreibender Weise ein Zielfeld projiziert. Als Messebene 5 ist hier eine solche Ebene bezeichnet, die sich zumindest im Wesentlichen senkrecht zu der Beschussrichtung 7 erstreckt und innerhalb welcher in einer im Folgenden noch zu beschreibenden Weise die Position eines Geschosses zu detektieren ist, wobei aus der Position innerhalb der Messebene auf die Trefferlage innerhalb der Zieldarstellung 7 geschlossen werden kann.

Die beiden Ablenkmodule 3, 4 emittieren jeweils einen Laserstrahl 3', 4', der in der Messebene 5 in Richtung der Pfeile 8, 9 um die Punkte 8', 9' als jeweilige Ausgangspunkte der Strahlung mit hoher Geschwindigkeit rotiert. Die Geschwindigkeit, mit welcher die Messebene 5 durch die genannten Laserstrahlen abgetastet wird, entspricht der Umdrehungsgeschwindigkeit der Ablenkmodule 3, 4.

In der Messebene 5 bilden eine, durch die Punkte 8', 9' verlaufende Linie 10 und eine, zu dieser Linie 10 senkrechte, durch den Punkt 8' verlaufende Linie 11 ein rechtwinkliges X-Y-Koordinatensystem, innerhalb welchem der Durchtrittspunkt 12 eines Geschosses quantitativ durch dessen Koordinaten x, y beschreibbar ist.

Das Funktionsprinzip der erfindungsgemäßen Vorrichtung besteht nunmehr darin, die Drehwinkelstellungen ß, γ der Ablenkmodule 3, 4 zum Zeitpunkt des Empfangs eines die Messebene 5 im Durchtrittspunkt 12 passierenden Geschosses zu ermitteln, aus welcher wiederum die Lage innerhalb der Zieldarstellung 7 abgeleitet werden kann. Anhand der beiden Drehwinkel ß, γ in Verbindung mit dem feststehenden bekannten Abstand der Punkte 8', 9' ist anhand elementarer trigonometrischer Beziehungen die Lage des Durchtrittspunktes 12 nach Maßgabe dessen Koordinaten x, y beschreibbar. Wesensmerkmal des in Fig. 2 gezeigten Ausführungsbeispiels ist, dass beide Laserlichtquellen 1, 2 in einer gemeinsamen, sich parallel zu der flächigen Zieldarstellung 7 erstreckenden Messebene 5 wirksam sind. Um eine eindeutige Trennung der an dem Geschoss reflektierten Signale beider Lichtquellen zu erreichen, können die beiden Laserlichtquellen 1, 2 mit unterschiedlichen Wellenlängen betrieben werden.

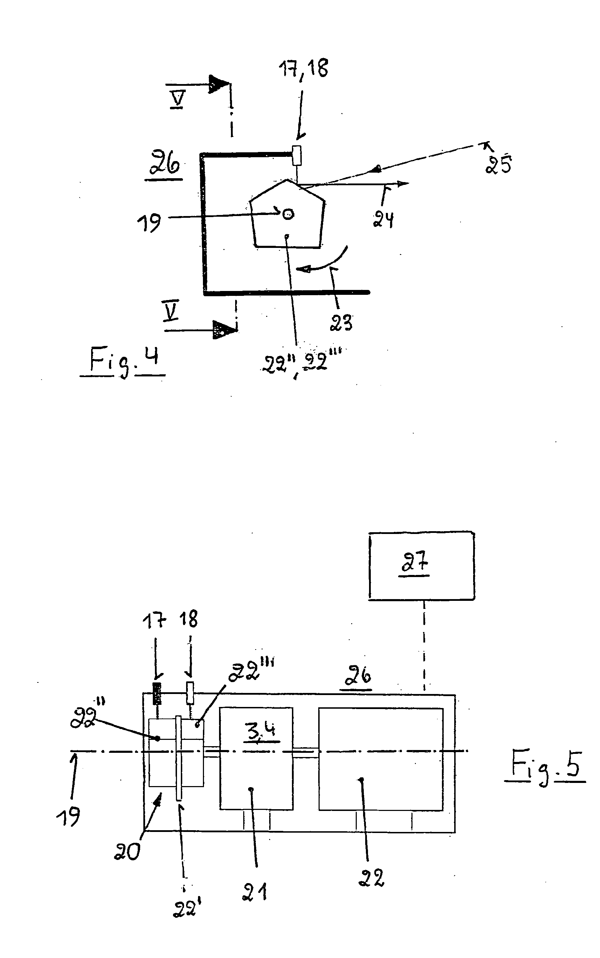

Die Verwendung von Laserlichtquellen mit unterschiedlichen Wellenlängen ist jedoch nicht unbedingt erforderlich. Fig. 3 zeigt eine Abwandlung des vorstehend beschriebenen Funktionsprinzips, welches durch zwei Laserlichtquellen 13, 14 mit gleicher Wellenlänge gekennzeichnet ist, deren Ablenkmodule jedoch mit der Maßgabe angeordnet sind, dass diese jeweils einen rotierenden Laserstrahl in solchen Messebenen 15, 16 emittieren, die zueinander parallel, in Beschussrichtung 6 gesehen, jedoch voneinander beabstandet sind, und sich vor der flächigen Zieldarstellung 7 befinden.

Eine Beabstandung der beiden Messebenen 13, 14 von 1 cm bis 2 cm erscheint im Regelfall ausreichend, da bei dem hier eingesetzten Linienlaser von einer Strahlaufweitung von lediglich 2 mm bei einer Strecke von 30 m ausgegangen werden kann. Die Auswertung der über die Ablenkmodule empfangenen Signale erfolgt in gleicher Weise, wie bei dem Ausführungsbeispiel entsprechend den Fig. 1 bis 2 anhand der Erfassung der Drehwinkel der Ablenkmodule in der jeweiligen Messebene 15, 16, wobei zum Zweck der Gewinnung der Koordinaten des Durchstoßpunktes 12 von der Projektion der Messebene 13 in die Messebene 14 oder umgekehrt ausgegangen wird.

Wie aus den Fig. 4 und 5 im Einzelnen ersichtlich ist, ist eine jede der beiden Laserlichtquellen durch einen ortsfest angeordneten Lasergenerator 17 sowie einen Strahlungsempfänger 18 gekennzeichnet, die einer um eine Achse 19 drehbaren Ablenkeinheit 20 gegenüberliegend angeordnet sind, die ihrerseits mit einem Motor 21 in Antriebsverbindung steht. Dem Motor 21 ist ein Drehwinkelgeber, z. B. ein Inkrementalgeber 22 zugeordnet, über welchen ein, die aktuelle Drehwinkelstellung der Ablenkeinheit 20 bezüglich der Achse 19 beschreibendes vorzugsweise digitales Signal generierbar ist. Die Ablenkeinheit 20 bildet in Verbindung mit dem Motor 21 sowie dem Drehwinkelgeber 22 ein Ablenkmodul 3, 4, das zum Senden sowie zum Empfangen von Laserstrahlung geeignet ist und zum Generieren eines den Drehwinkel beschreibenden Signales, unter dem ein an dem, die Messebene 5, 15, 16 durchdringenden Geschoss reflektiertes Signal empfangen wird.

Die im Betrieb der Vorrichtung in Richtung des Pfeils 23 unter Mitwirkung des Motors 21 rotierende Ablenkeinheit 20 ist als Pentaprisma ausgebildet und besteht aus zwei, über eine Trennscheibe 22' voneinander getrennten, bezüglich der Achse 19 nebeneinander angeordnete Spiegelflächenanordnungen 22", 22"', deren fünf Teilspiegel eine vorzugsweise gleiche Größe aufweisen. Diese Spiegelanordnungen 22", 22'" liegen jeweils dem genannten Lasergenerator 17 bzw. dem Strahlungsempfänger 18 gegenüber, so dass - wie in Fig. 4 dargestellt - Strahlung 24 zwecks Abtastung der Messebene 5, 15, 16 ausgestrahlt und reflektierte Strahlung 25 im Falle des Durchtritts eines Geschosses durch die Messebene empfangen werden kann.

Die aktuelle Drehwinkelstellung der Ablenkeinheit 20 ist mittels des Inkrementalgebers 22 jederzeit als Messsignal quantitativ verfügbar, so dass bei Empfang eines reflektierten Signals, welches den Durchtritt eines Geschosses durch die jeweilige Messebene signalisiert, die beiden eingangs genannten Drehwinkels ß, γ ermittelbar sind. Mittels dieser beiden Drehwinkel in Verbindung mit dem Abstand der Punkte 8', 9' (Fig. 1) ist die Lage des Durchtrittspunktes 12 des Geschosses in einer sich senkrecht zu der Beschussrichtung 6 bzw. der flächigen Zieldarstellung 7 erstreckenden Ebene anhand von X-Y-Koordinaten analytisch ermittelbar.

Die erfindungsgemäße Vorrichtung besteht somit faktisch lediglich aus zwei Baueinheiten 26, die jeweils einen Lasergenerator 17, einen Strahlungsempfänger 18 sowie ein Ablenkmodul 3, 4 umfassen, die zweckmäßigerweise zur Auswertung mit einem Rechner 27 in Wirkverbindung stehen. Sie kann in Verbindung mit nahezu beliebigen flächigen Zieldarstellung 7 benutzt werden und ist insbesondere aufgrund der hohen Erfassungsgeschwindigkeit auch für eine Verwendung in Verbindung mit automatischen Waffen geeignet.

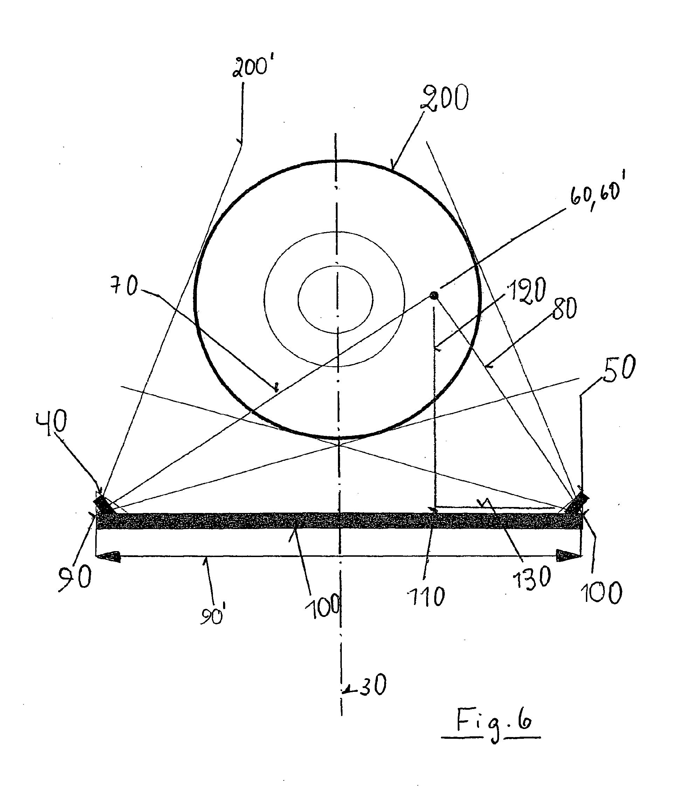

Mit 100 ist in Fig. 6 eine zum bodenseitigen Auflegen bestimmte rohrförmige, aus einem metallischen Werkstoff bestehende Messbasis bezeichnet, die sich mit geringem Abstand vor einem scheibenartigen Zielfeld 200 befindet. Das Zielfeld 200 kann von an sich bekannter Art sein und die Abbildung eines ebenen Zielobjektes tragen. Diese Messbasis 100 erstreckt sich horizontal und senkrecht zu einer Beschussrichtung des Zielfeldes 200, welche senkrecht zur Zeichenebene der Fig. 6 gerichtet ist.

An den Enden der Messbasis 100 ist jeweils ein Radargerät 40, 50 fest angebracht, und zwar mit der Maßgabe, dass sich die Richtcharakteristiken der Antennen dieser Geräte symmetrisch aufwärts in Richtung auf eine vertikale Mittelebene 30 der Messbasis 100 hin erstrecken, wobei deren Hauptstrahlrichtungen jeweils einen Winkel von 45° mit der Messbasis 100 bilden. Die Antennen der Radargeräte 40, 50, insbesondere ihre Richtcharakteristiken sind im Übrigen dahingehend angelegt, dass sie lediglich zur Abtastung einer, dem Zielfeld 200 vorgelagerten flächigen, von einem zu erfassenden Geschoss im Wesentlichen senkrecht zu durchdringenden Messebene 200' eingerichtet sind. Die Messebene 200' erstreckt sich regelmäßig ungefähr parallel zu der Ebene des Zielfeldes 200.

Die Radargeräte 40, 50 sind beispielsweise nach dem Radarverfahren eines Dauerstrichradars (CW-Radar) eingerichtet und strahlen im einfachsten Fall ein kontinuierliches, insbesondere unmoduliertes HF-Signal aus, das an einem, die genannte Messebene 200' durchdringenden Geschoss reflektiert wird.

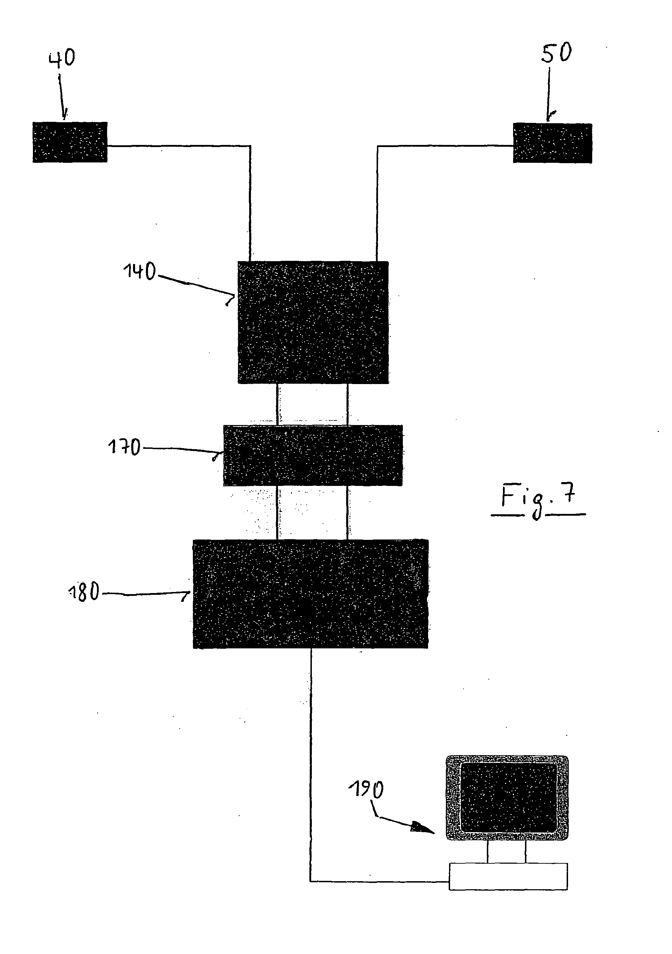

Zur Erläuterung der Wirkungsweise dieser Anordnung wird im Folgenden ergänzend auf die Darstellungen der Fig. 7 bis 10 Bezug genommen, in denen Funktionselemente, die mit denjenigen der Fig. 6 übereinstimmen, entsprechend beziffert sind, so dass auf eine diesbezügliche wiederholte Beschreibung verzichtet werden kann.

In der in der Zeichenebene der Fig. 6 gelegenen Messebene 200', die durch die Hauptstrahlrichtungen der links- und rechtsseitigen Radargeräte definiert ist, wird der Durchstoßpunkt 60 eines zu vermessenden Geschosses 60' zunächst anhand der Entfernungen 70, 80 zwischen diesem Durchstoßpunkt 60 und den radargeräteeigenen Bezugspunkten 90, 100 ermittelt, und zwar durch Messung des Energiegehalts eines Echoimpulses bzw. dessen Impulshöhe, welcher/welche in einer funktionalen Abhängigkeit zu dem Betrag der jeweiligen Entfernung 70, 80 steht. In der Messebene 200' bilden die Entfernungen 70, 80 einerseits und die Entfernung 90' der Bezugspunkte 90, 100 voneinander ein Dreieck, anhand welchem die Lage des Durchstoßpunktes 60 errechenbar ist.

Zur Beschreibung der Lage des Durchstoßpunktes 60 relativ zu dem Zielfeld 200, insbesondere dessen Zielobjekt wird ein X-Y-Koordinatensystem in der Messebene 200' definiert, dessen Nullpunkt mit dem Bezugspunkt 90 zusammenfällt, dessen X-Achse durch die Verbindungslinie der Bezugspunkte 90, 100 gebildet wird und dessen Y-Achse sich in dem Bezugspunkt 90 senkrecht zu dieser Verbindungslinie erstreckt. Mit 110 ist in diesem X-Y-Koordinatensystem der Schnittpunkt einer Senkrechten ausgehend von dem Durchstoßpunkt 60 auf die genannte Verbindungslinie bezeichnet, so dass die Punkte 110, 100, 60 ein rechtwinkliges Dreieck definieren, dessen eine Kathete 120 die Y-Koordinate des Durchstoßpunktes 60 bildet, dessen Hypothenuse der Strecke 80 entspricht und über dessen Kathete 130 die X-Koordinate des Durchstoßpunktes 60 als Differenz der Beträge der Entfernung 90' der Bezugspunkte 90, 100 und der Länge der Kathete 130 errechenbar ist. Das genannte X-Y-Koordinatensystem ist hierbei mit dem Zielfeld 20 in einer, eine rechnergestützte Auswertung ermöglichenden Weise ausgerichtet.

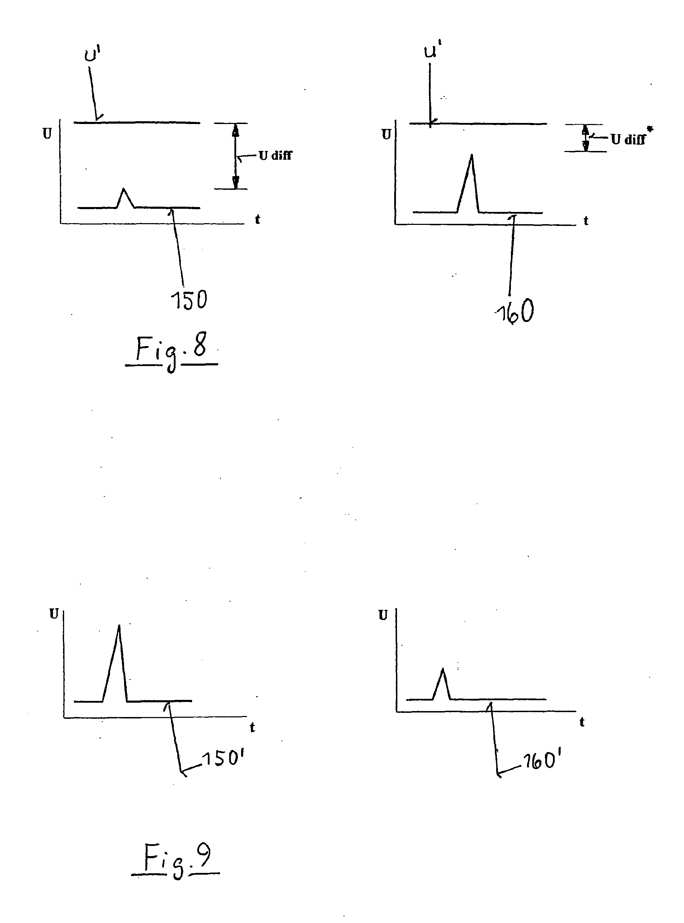

Die Fig. 8 zeigt anhand zweier Grafiken die Echosignale 150, 160 der links- und rechtsseitigen Radargeräte 40, 50 in der Form von Verläufen einer Spannung U als Funktion der Zeit t. Mit U' ist ein konstanter Wert einer Bezugspannung bezeichnet, der grundsätzlich beliebig bemessen sein kann.

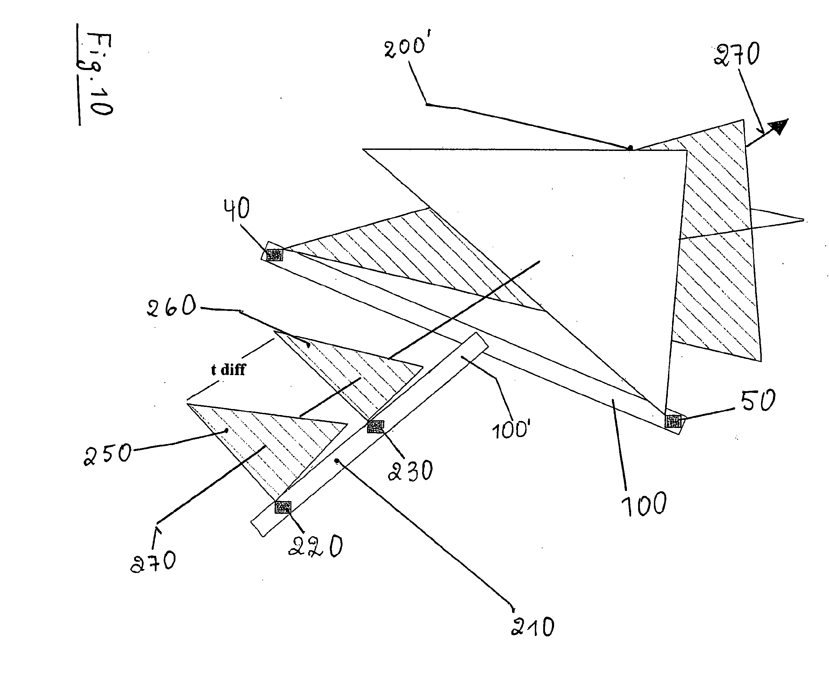

Zur Umsetzung dieses vorstehend beschriebenen Konzepts werden die Echosignale 150, 160 der links- und rechtsseitigen Radargeräte 40, 50 zwecks Auswertung in einem Funktionsblock 140 analog erfasst. Diese weisen nach Maßgabe der unterschiedlichen Entfernungen bzw. Längen 70, 80 hinsichtlich der Bezugsspannung U' unterschiedliche Differenzwerte U_{diff} und U_{diff}* auf. Lediglich zum Zweck einer erleichterten rechnerischen Weiterverarbeitung werden in einem weiteren Funktionsblock 170 die den Signalen 150, 160 entsprechenden, in Fig. 9 dargestellten Differenzsignale 150', 160' gebildet, welche den genannten Differenzwerten U_{diff}, U_{diff}* entsprechen.

Die abschließende Berechnung der X- und Y-Koordinaten ausgehend von dem, durch die Punkte 90, 100, 60 gebildeten Dreieck erfolgt in einem nachgeordneten Funktionsblock 180, wobei das Ergebnis dieser Auswertung zweckmäßig in digitaler Form zwecks visueller Darstellung, Speicherung und Auswertung einer Rechnereinheit 190 übertragen wird.

Das Konzept der Fig. 6 bis 9 wird in Fig. 10 mit Hinblick auf eine einfach realisierbare Geschwindigkeitsmessung eines Geschosses und - hiermit zusammenhängend - die Erkennung der Geschossart bzw. des Kalibers erweitert.

Zu diesem Zweck wird an der Messbasis 100, sich senkrecht zu dieser erstreckend, eine weitere rohrförmige, zum bodenseitigen Aufliegen bestimmte Trägerbasis 100' vorzugsweise lösbar befestigt. Auf dieser sind nach Maßgabe eines definierten Abstands 210 entlang dieser zwei weitere Radargeräte 220, 230 angebracht, die ebenfalls mit der genannten Rechnereinheit 190 in Wirkverbindung stehen. Diese beiden Geräte 220, 230 sind vorzugsweise wiederum solche, die nach dem Radarverfahren eines CW-Radars eingerichtet sind, wobei deren Richtcharakteristiken mit der Maßgabe gewählt sind, dass sich deren Hauptstrahlrichtungen in Ebenen senkrecht zu der Trägerbasis 100' und parallel mit Abstand zueinander erstrecken. Idealisiert werden durch die beiden Radargeräte 220, 230 somit zwei, in Schussrichtung voneinander beabstandete Messebenen 250, 260 eingerichtet.

Die Flugbahn 270 eines Geschosses durchstößt somit nacheinander die Messebenen 250, 260 der Radargeräte 220, 230 und anschließend die durch die Radargeräte 40, 50 gemeinsam definierte Messebene 200'.

Gemessen wird nunmehr die Zeitdifferenz t_{diff}, die zum Passieren der Messebenen 250, 260 benötigt wird, so dass anhand deren Abstandes 210 die Geschwindigkeit und anhand beispielsweise der Impulshöhen das Kaliber des Geschosses ermittelbar sind.

Die vorstehend beschriebenen Ausführungsbeispiele können in vielfältiger Weise variiert werden. So kann beispielsweise auf die Bauelemente Messbasis und Trägerbasis verzichtet werden, wenn in sonstiger, insbesondere reproduzierbarer Weise eine Positionierung der Radargeräte nach Maßgabe definierter Abstände zueinander gegeben ist, und zwar auch in Ausrichtung mit dem Zielfeld 200. Durch die genannten Bauelemente wird eine exakte Positionierung der Radargeräte jedoch wesentlich erleichtert.

In dem vorstehend beschriebenen Ausführungsbeispiel sind die Messbasis 100 sowie die Trägerbasis 100' bzw. die Radargeräte stets bodenseitig mit einer aufwärts gerichteten Hauptstrahlungsrichtung angeordnet. Es ist dies eine zweckmäßige, leicht einzurichtende Ausführungsform. Eine Umkehrung dieser Anordnung, so dass sich die Radargeräte oberhalb eines Zielfeldes mit einer im Wesentlichen abwärts gerichteten Hauptstrahlungsrichtung befinden, wird jedoch ausdrücklich nicht ausgeschlossen und kann unter bestimmten Umständen zweckmäßig sein.

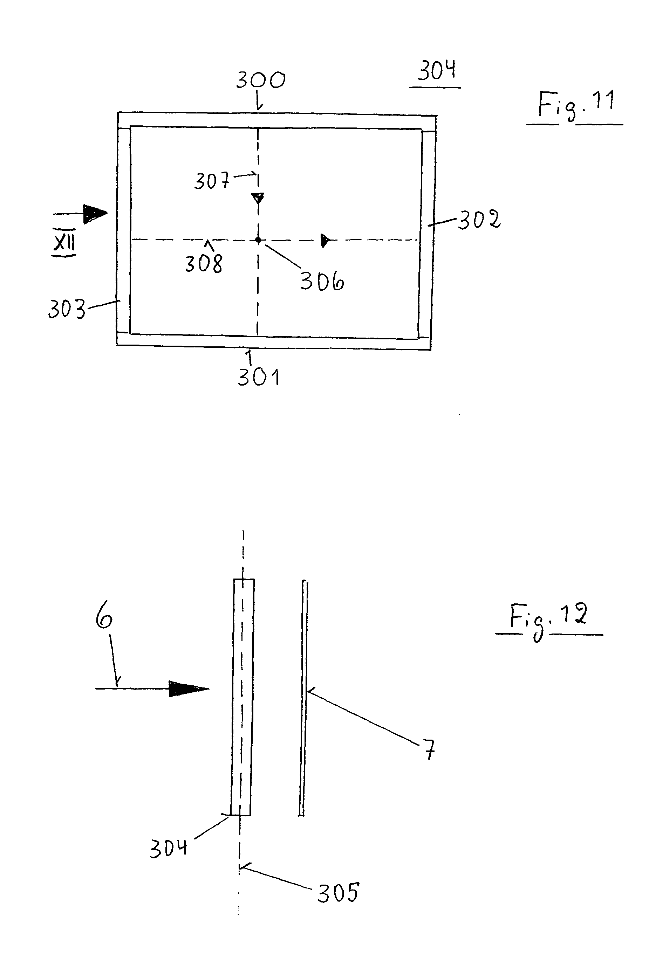

Die in den Fig. 11 und 12 dargestellte Ausführungsform unterscheidet sich von den vorstehend beschriebenen Ausführungsformen lediglich in der Bildung der Messebene und dem Prinzip der Messwertbildung.

Mit 300, 301 sind jeweils zueinander parallele, sich horizontal erstreckende Rahmenelemente bezeichnet, die zusammen mit sich vertikal erstreckenden Rahmenelementen 302, 303 einen in etwa rechteckigen Rahmen 304 definieren, der sich parallel zu einer flächigen Zieldarstellung 7 erstreckt. Der Rahmen 304 umgibt somit - in Beschussrichtung 6 gesehen - die Zieldarstellung 7.

In die Struktur der Rahmenelemente 300, 301 eingebunden sind jeweils linienhafte Anordnungen von einander jeweils paarweise gegenüberliegenden Sende- und Empfangseinheiten, wobei die Rahmenelemente 302, 303 gleichermaßen ausgerüstet sind. Die einander gegenüberliegenden Sende- und Empfangseinheiten bilden in ihrer Gesamtheit ein Netzwerk aus Strahlungsgängen, mit denen die von dem Rahmen 304 umschlossene Fläche gleichförmig überdeckt ist. Sämtliche dieser Strahlengänge verlaufen innerhalb einer Messebene 305, die sich gleichermaßen parallel zu der Zieldarstellung 7 erstreckt.

Die Lage des Durchstoßpunktes 306 eines diese Messebene 305 durchdringenden Geschosses ist somit anhand der durch dieses unterbrochenen Strahlengänge 307, 308 zweier Paare von Sende- und Empfangseinheiten feststellbar und zur Ermittlung der Lage innerhalb der Zieldarstellung 7 auswertbar.

Ein Strahlengang für vorstehend dargestellte Ausführungsform kann durch Strahlung im sichtbaren oder auch unsichtbaren, z. B. infraroten Wellenlängenbereich gebildet werden. Besonders vorteilhaft ist die Verwendung von Laserstrahlung.

Die zur Darstellung des vorstehend beschriebenen Messebene 305 benutzten Sendeund Empfangseinheiten sind in jedem Fall innerhalb des Rahmens 304 geschützt angeordnet.

Bei allen vorstehend beschriebenen Ausführungsformen ergibt sich der Vorteil, dass ein Verbrauch an Leinwand oder auch Papier oder sonstigen flächenhaften, als Projektionsfläche für Zieldarstellungen benutzten Materialien im Vergleich zu einer Trefferlagendarstellung durch rückseitige Beleuchtung der Projektionsfläche erheblich vermindert werden kann.

## Patentansprüche

1. Vorrichtung zur Lageerfassung eines Geschosses relativ zu einer flächigen Zieldarstellung (7) mit zwei beiderseits einer Beschussrichtung (6) der Zieldarstellung (7) befindlichen, einen festen Abstand voneinander aufweisenden, zum Senden und zum Empfang von Strahlung in eine bzw. aus einer, sich beispielsweise vor der Zieldarstellung (7) befindlichen Messebene (5, 15, 16) eingerichteten Baueinheiten (26), wobei die Baueinheiten zur Feststellung der Lage des Punktes (12) bestimmt sind, an dem das Geschoss die Messebene (5, 15, 16) durchstößt, so dass die Lage des Geschosses in der Zieldarstellung (7) anhand der Lage des Durchstoßpunktes (12) in der Messebene beschreibbar ist, **dadurch gekennzeichnet, dass** jede Baueinheit (26) einen Ablenkmodul (3, 4) aufweist, der mit Hinblick auf die linienhafte Austastung der Messebene (5, 15, 16) zur Emittierung eines in der Messebene rotierenden Strahles, mit Hinblick auf die Detektion eines Geschosses in der Messebene, zum Empfang eines von dem, die Messebene durchdringenden Geschosses reflektierten Strahles sowie mit Hinblick auf eine Lagebestimmung des Geschosses in der Messebene zur Generierung eines, die Drehwinkelstellung des jeweiligen Ablenkmodules (3, 4) zum Zeitpunkt des Empfanges des reflektierten Strahles beschreibenden Signales eingerichtet ist und dass beide Baueinheiten (26) mit Strahlungsquellen versehen sind, die mit dem Ablenkmodul (3, 4) der jeweiligen Baueinheit (26) in Wirkverbindung stehen.

2. Vorrichtung nach Anspruch 1, **dadurch gekennzeichnet, dass** die Ablenkmodule (3, 4) mit einem Rechner (27) in Verbindung stehen, der zur Ermittlung der Koordinaten des Durchtrittspunktes (12) eines Geschosses in der Messebene (5, 15, 16) ausgehend von den Drehwinkelwerten der Ablenkmodule (3, 4) im Zeitpunkt des Empfangs eines an dem Geschoss reflektierten Strahles eingerichtet ist.

3. Vorrichtung nach Anspruch 1 oder 2, **dadurch gekennzeichnet, dass** die Strahlungsquelle ein Lasergenerator (1', 2', 17) ist.

4. Vorrichtung nach Anspruch 1 oder 2, **dadurch gekennzeichnet, dass** die Strahlungsquelle ein Generator für Infrarotstrahlung ist.

5. Vorrichtung nach einem der Ansprüche 1 bis 4, **dadurch gekennzeichnet, dass** die Ablenkmodule (3, 4) beider Strahlungsquellen zur Umlenkung von Strahlung in einer gemeinsamen Messebene (5) angeordnet und eingerichtet sind.

6. Vorrichtung nach Anspruch 5, **dadurch gekennzeichnet, dass** sich die Messebene (5) parallel zu der Ebene der Zieldarstellung (7) erstreckt.

7. Vorrichtung nach Anspruch 5 oder 6 **gekennzeichnet durch** zwei Strahlungsquellen ungleicher Wellenlänge.

8. Vorrichtung nach einem der Ansprüche 1 bis 4, **dadurch gekennzeichnet, dass** die Ablenkmodule (3, 4) beider Strahlungsquellen zur Umlenkung von Strahlung in voneinander in Beschussrichtung (6) einer Zieldarstellung (7) getrennten und voneinander beabstandeten Messebenen (15, 16) angeordnet und eingerichtet sind.

9. Vorrichtung nach Anspruch 8, **dadurch gekennzeichnet, dass** sich die Messebenen (15, 16) der Ablenkmodule (3, 4) parallel zueinander und zu der Zieldarstellung (7) erstrecken.

10. Vorrichtung nach Anspruch 8 oder 9 **gekennzeichnet durch** zwei Strahlungsquellen gleicher Wellenlänge.

11. Vorrichtung nach einem der vorangegangenen Ansprüche 1 bis 10, **dadurch gekennzeichnet, dass** jeder Ablenkmodul (3, 4) aus einer um eine Achse (19) drehbaren Anordnung (22", 22"') von Spiegelflächen besteht, die zur Umlenkung von Strahlung der Strahlungsquelle innerhalb einer Messebene (5, 15, 16) und zur Umlenkung reflektierter Strahlung aus der Messebene in Richtung auf einen Strahlungsempfänger (18) hin besteht, die mit einem Motor (21) und einem Drehwinkelgeber (22) in Wirkverbindung steht und dass sich die Achse (19) senkrecht zu der Messebene (5, 15, 16) erstreckt.

12. Vorrichtung nach Anspruch 11, **dadurch gekennzeichnet, dass** jeder Ablenkmodul (3, 4) aus zwei, axial bezüglich der Achse (19) nebeneinander befindlichen Anordnungen (22", 22"') von Spiegelflächen besteht, die jeweils der Strahlungsquelle bzw. dem Strahlungsempfänger (18) zugeordnet sind.

13. Vorrichtung nach einem der Ansprüche 1 bis 12, **dadurch gekennzeichnet, dass** sich die Messebene (5) / die Messebenen (15, 16) - in Beschussrichtung (6) gesehen - vor der Zieldarstellung (7) befinden.

14. Vorrichtung nach einem der Ansprüche 1 bis 12, **dadurch gekennzeichnet, dass** sich die Messebene (5) / die Messebenen (15, 16) - in Beschussrichtung (6) gesehen - hinter der Zieldarstellung (7) befinden.

15. Vorrichtung nach einem der Ansprüche 1 bis 14 **gekennzeichnet durch** einen, aus Gummi oder Kunststoff hergestellten flächigen Träger als Projektionsfläche für eine Zieldarstellung (7).

16. Vorrichtung zur Lageerfassung eines Geschosses relativ zu einer flächigen Zieldarstellung (200) mit zwei beiderseits einer Beschussrichtung der Zieldarstellung (200) befindlichen, einen festen Abstand voneinander aufweisenden, zum Senden und zum Empfang von Strahlung in eine bzw. aus einer, sich beispielsweise vor der Zieldarstellung (200) befindlichen Messebene (200') eingerichteten Baueinheiten, wobei die Baueinheiten zur Feststellung der Lage des Punktes (60) bestimmt sind, an dem das Geschoss die Messebene (200') durchstößt, so dass die Lage des Geschosses in der Zieldarstellung (200) anhand der Lage des Durchstoßpunktes (60) in der Messebene beschreibbar ist, **gekennzeichnet durch** eine Anordnung von zwei, jeweils zur Entfernungsmessung des Durchstoßpunktes (60) der Flugbahn (270) des Geschosses (60') in einer Messebene (200') eingerichteten, eine definierte Entfernung (90') voneinander aufweisenden, die genannten Baueinheiten bildenden Radargeräte (40, 50), die vor der Zieldarstellung (200) mit der Maßgabe angeordnet sind, dass die Hauptstrahlungsrichtungen ihrer Richtcharakteristiken die Messebene (200') definieren, so dass ausgehend von der Entfernung (90') der Radargeräte (40, 50) voneinander sowie den gemessenen Entfernungen (70, 80) des Durchstoßpunktes (60) von den Radargeräten (40, 50) die Lage des Durchstoßpunktes (60) in der Messebene (200') errechenbar ist.

17. Vorrichtung nach Anspruch 16, **dadurch gekennzeichnet, dass** die Radargeräte (40 50) - in Beschussrichtung gesehen - beiderseits der Zieldarstellung bzw. des Zielfeldes (200) angeordnet sind.

18. Vorrichtung nach Anspruch 16 oder 17 **gekennzeichnet durch** eine Rechnereinheit (190), die mit den Radargeräten (40, 50) in Verbindung steht und zur Auswertung empfangener, an einem Geschoss (60') reflektierter Signale (150, 160) bestimmt und eingerichtet ist.

19. Vorrichtung nach einem der vorrangegangenen Ansprüche 16 bis 18, **dadurch gekennzeichnet, dass** die beiden Radargeräte (40, 50) nach Art von Dauerstrichradars (CW-Radar) eingerichtet sind.

20. Vorrichtung nach einem der Ansprüche 16 bis 19, **dadurch gekennzeichnet, dass** die beiden Radargeräte (40, 50) mit der Maßgabe beiderseits des Zielfeldes (200) angeordnet sind, dass die Hauptstrahlungsrichtungen deren Richtcharakteristiken symmetrisch aufsteigend - sich beiderseits einer vertikalen Mittelebene (3) auf diese hin erstreckend - zwischen den Geräten verlaufen.

21. Vorrichtung nach einem der vorangegangenen Ansprüche 16 bis 20, **dadurch gekennzeichnet, dass** die beiden Radargeräte (40, 50) auf einer langgestreckten, sich im Wesentlichen parallel zu der Messebene (2') erstreckenden, zum bodenseitigen Aufliegen bestimmten Messbasis (100) nach Maßgabe der definierten Entfernung (90') voneinander angeordnet sind.

22. Vorrichtung nach einem der vorangegangenen Ansprüche 16 bis 21, **dadurch gekennzeichnet, dass** wenigstens zwei weitere, in Beschussrichtung mit einem definierten Abstand voneinander und vor der Messebene (200') angeordnete, jeweils eine, sich im Wesentlichen senkrecht zu der Beschussrichtung erstreckende Messebenen (250, 260) bildende Radargeräte (220, 230) vorgesehen sind, die zumindest zur Messung der Geschwindigkeit eines sich in Richtung auf die Messebene (200') hin bewegenden Geschosses (60') bestimmt und eingerichtet sind.

23. Vorrichtung nach einem der vorangegangenen Ansprüche 16 bis 21 **gekennzeichnet durch** ein in Beschussrichtung vor der Messebene (200') angeordnetes, eine sich im Wesentlichen senkrecht zu der Beschussrichtung erstreckende Messebene bildendes Radargerät, das zumindest zur Erkennung der Größe bzw. des Kalibers eines Geschosses (60') bestimmt und eingerichtet ist.

24. Vorrichtung nach Anspruch 22, **dadurch gekennzeichnet, dass** wenigstens das eine der beiden Radargeräte (220, 230) zusätzlich zur Erkennung der Größe eines Geschosses (60') bestimmt und eingerichtet ist.

25. Vorrichtung nach einem der Ansprüche 22 bis 24, **dadurch gekennzeichnet, dass** die zusätzlichen Radargeräte (220, 230) nach Art von Dauerstrichradars (CW-Radar) eingerichtet sind.

26. Vorrichtung nach einem der vorangegangenen Ansprüche 16 bis 25 **gekennzeichnet durch** wenigstens eine zum bodenseitigen Aufliegen bestimmte langgestreckte Trägerbasis (100'), auf welcher die zusätzlichen Radargeräte (220, 230) angeordnet sind.

27. Vorrichtung nach Anspruch 26, **dadurch gekennzeichnet, dass** die Trägerbasis (100') mit der Messbasis (100) in Verbindung steht und sich senkrecht zu dieser erstreckt.

28. Vorrichtung zur Lageerfassung eines Geschosses relativ zu einer flächigen Zieldarstellung (7) mit zwei beiderseits einer Beschussrichtung (6) der Zieldarstellung (7) befindlichen, einen festen Abstand voneinander aufweisenden, zum Senden und zum Empfang von Strahlung in eine bzw. aus einer, sich beispielsweise vor der Zieldarstellung (7) befindlichen Messebene (5, 15, 16, 305) eingerichteten Baueinheiten (26), wobei die Baueinheiten zur Feststellung der Lage des Punktes(12) bestimmt sind, an dem das Geschoß die Messebene (5, 15, 16) durchstößt, so dass die Lage des Geschosses in der Zieldarstellung (7) anhand des Lage des Durchstoßpunktes (12) in der Messebene beschreibbar ist, **dadurch gekennzeichnet, dass** die Baueinheiten durch linienhaft ausgebildete, rechts- und linksseitig sowie ober- und unterseitig bezüglich einer Beschussrichtung (6) in der Messebene (305) angeordnete, einander jeweils gegenüberliegende, zum Senden sowie zum Empfangen von Strahlung eingerichteten Anordnungen gebildet sind, die jeweils aus einer Vielzahl einander paarweise zugeordneter, einen Strahlengang bildenden Sende- und Empfangseinheiten bestehen, die mit der Maßgabe eingerichtet sind, dass die Lage eines Durchstoßpunktes eines Geschosses in der Messebene (305) anhand der Unterbrechung zweier Strahlengänge (307, 308) beschreibbar ist.

29. Vorrichtung nach Anspruch 28, **dadurch gekennzeichnet, dass** die linienhaften Anordnungen zum Senden bzw. zum Empfangen von Laserstrahlung eingerichtet sind.
